# EUROPÄISCHE PATENTSCHRIFT

(11) **EP 2 773 886 B1**
(45) Veröffentlichungstag und Bekanntmachung des Hinweises auf die Patenterteilung: **07.03.2018**
(21) Anmeldenummer: 12777893.4
(22) Anmeldetag: 17.10.2012
(51) Int. Cl.: F16H 3/66, B60K 17/28, F16H 3/56

(54) **LASTSCHALTGETRIEBE**
POWER SHIFT TRANSMISSION
BOÎTE DE VITESSES AVEC COMMANDE SOUS CHARGE

(30) Priorität: 31.10.2011 DE 102011085495
(43) Veröffentlichungstag der Anmeldung: 10.09.2014
(73) Patentinhaber: Deere & Company, Moline, IL 61265 (US)
(72) Erfinder: OTTEN, Ulrich, 67396 Speyer (DE); SCHALLER, Martin, 64732 Bad König (DE)
(74) Vertreter: Reichert, Christian
(86) Internationale Anmeldenummer: PCT/EP2012/070539
(87) Internationale Veröffentlichungsnummer: WO 2013/064370

(56) Entgegenhaltungen:
- CH-A- 257 919
- US-A- 3 772 939
- US-A- 4 189 962

## Beschreibung

Die Erfindung betrifft ein Lastschaltgetriebe mit einer Eingangswelle, einer koaxial zur Eingangswelle angeordneten ersten Ausgangswelle, einem Planetengetriebe mit einem mit der Eingangswelle in Verbindung stehenden Planetenträger und wenigstens drei Schaltelementen.
Lastschaltgetriebe mit verschiedenen Übersetzungsstufen, bei welchen die Umschaltung zwischen den verschiedenen Übersetzungsstufen in Abhängigkeit von der Belastung bzw. einer benötigten Geschwindigkeit erfolgt, sind bekannt und werden seit vielen Jahren insbesondere in der Automobilindustrie eingesetzt.
Ein derartiges Getriebe ist beispielsweise in der CH 257919 offenbart. Hier wird ein automatisches Getriebe beschrieben, bei dem in einer ersten Gangstufe eine erste Kupplung als Übertragungsorgan zwischen einer Antriebswelle und einer ersten Zwischenwelle dient, wobei letztere über einen dreistufigem Planetensatz mit einer Abtriebswelle verbunden ist. In einer zweiten Gangstufe wird die Antriebswelle über eine zweite Kupplung mit einer zweiten Zwischenwelle verbunden, wobei letztere über denselben Planetensatz jedoch mit anderer Übersetzung mit der Abtriebswelle verbunden ist. In einer dritten Gangstufe wird die Antriebswelle über die zweite und eine dritte Kupplung direkt mit dem Planetenträger verbunden, wobei über den Planetensatz eine weitere Übersetzung zur Abtriebswelle realisierbar ist. Somit wird ein dreistufiges Lastschaltgetriebe bereitgestellt, welches jedoch zum einen fertigungstechnisch aufwändig ausgebildet ist und zum anderen insgesamt mit hohen Schleppmomentverlusten und hohen Wälzleistungen behaftet ist, da sowohl in der ersten, als auch in der zweiten Gangstufe jeweils zwei Kupplungen geöffnet sind bzw. der Planetensatz dann auch jeweils als Vorgelegestruktur dient. Zusätzlich wirkt sich auch die insgesamt hohe Massenträgheit der Anordnung nachteilig auf das Schaltverhalten eines eventuell nachgeschalteten Haupt- bzw. Gruppengetriebes aus, was durch einen linear proportionalen Zusammenhang zwischen Massenträgheit und Schaltzeit begründet ist.
Ein weiteres Lastschaltgetriebe offenbart die US 3 772 939 A, in der eine Eingangswelle koaxial zu einer Ausgangswelle angeordnet ist. Die Eingangswelle steht mit einem Planetenträger eines Planetengetriebes in Verbindung, wobei wenigstens drei Schaltelemente für das Lastschaltgetriebe vorgesehen sind.

Die der Erfindung zugrunde liegende Aufgabe wird darin gesehen, ein Lastschaltgetriebe der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Lastschaltgetriebe der eingangs genannten Art derart ausgebildet, dass das Planetengetriebe wenigstens zwei Stufenplanetensätze umfasst, die an dem gemeinsamen Planetenträger gelagert sind und wobei jeder Stufenplanetensatz eingangsseitig und ausgangsseitig mit jeweils einer Sonne kämmt, wobei mit dem ersten Schaltelement die erste Ausgangswelle mit der ausgangsseitigen Sonne des einen Stufenplanetensatzes verbindbar ist, mit dem zweiten Schaltelement die erste Ausgangswelle mit der ausgangsseitigen Sonne des anderen Stufenplanetensatzes verbindbar ist und wobei mit dem dritten Schaltelement die eingangsseitigen Sonnenräder beider Stufenplanetensätze, insbesondere gegenüber dem Getriebegehäuse, blockierbar sind. Die Anordnung von zwei Stufenplanetensätzen auf nur einem Planetenträger, welcher direkt mit der Eingangswelle verbunden ist, sowie die koaxiale Anordnung der Ausgangswelle und die darauf gelagerten ersten und zweiten Schaltelemente ermöglichen, dass für jeden Betriebsmodus nur jeweils ein Schaltelement im geöffneten Zustand ist, wodurch Schleppmomente reduziert werden. Ferner wird auf eine Vorgelegestruktur verzichtet, was zu geringen Wälzverlusten führt. Die kompakte Anordnung, insbesondere die Ausführung der Ausgangswelle und der damit verbundenen Konstruktionselemente des Lastschaltgetriebes, stellt ferner eine konstruktiv einfach zu fertigende Form mit geringen Massenträgheiten dar, wodurch insbesondere auch die Schaltzeiten für ein an das Lastschaltgetriebe koppelbares Synchrongetriebe deutlich reduziert bzw. die Schaltperformance bzw. das Schaltverhalten verbessert werden. Insgesamt führt dies gegenüber anderen bekannten Lastschaltgetrieben zu einer deutlichen Wirkungsradsteigerung. Zudem wird eine extrem kompakte Anordnung geschaffen, die zudem konstruktiv einfach zu fertigen ist, da unter anderem auch auf ein Hohlrad im Planetengetriebe gänzlich verzichtet werden kann, so dass der Aufwand von Fertigungsmaßnahmen minimiert wird.
Eine Verbindung der ausgangsseitigen Sonnenräder mit der ersten Ausgangswelle, sowie ein Blockieren der eingangsseitigen Sonnenräder können jeweils durch Schließen der entsprechenden Schaltelemente erfolgen, so dass für jeden Betriebszustand des Lastschaltgetriebes jeweils zwei Schaltelemente geschlossen sind. Der Begriff Schaltelemente ist hier und im Folgenden, insbesondere in den Patentansprüchen, stellvertretend für Einrichtungen zu verstehen, mit denen drehende Getriebekomponenten miteinander in drehfeste Verbindung gebracht und wieder gelöst werden können. Diesbezüglich können beispielsweise Lamellenkupplungen oder Klauenkupplungen oder dergleichen eingesetzt werden.

Die eingangsseitigen Sonnenräder können drehfest auf einer koaxial zur Eingangswelle gelagerten Hohlwelle gelagert sein. Über das dritte Schaltelement können so die eingangsseitigen Sonnenräder beider Stufenplanetensätze durch blockieren der Hohlwelle blockiert werden. Eingangsseitig bedeutet hier, dass die Sonnenräder auf der Eingangswellenseite des Planetensatzes angeordnet sind. Auch andere Anordnungen sind hier denkbar, solange gewährleistet ist, dass die beiden eingangsseitigen Sonnenräder der Planetensätze direkt oder indirekt miteinander drehfest in Verbindung stehen, und einen frei geschalteten oder einen blockierten Betriebszustand einnehmen können.

Die erste Ausgangswelle kann als Hohlwelle ausgebildet sein, durch welche sich eine mit der Eingangswelle verbundene zweite Ausgangswelle erstreckt. Die zweite Ausgangswelle ist über eine starre Kupplung oder Verdrehsicherung mit der Eingangswelle verbunden. Die zweite Ausgangswelle kann beispielsweise als Antrieb für ein Zapfwellengetriebe dienen oder kann selbst als Zapfwelle ausgebildet sein.

Das erste und zweite Schaltelement kann jeweils als Kupplung ausgebildet sein, wobei die Kupplungen jeweils einen Kupplungsteil aufweisen, beispielsweise eingangsseitig, der mit einem der ausgangsseitigen Sonnenräder verbunden ist, und wobei die Kupplungen jeweils einen anderen Kupplungsteil aufweisen, beispielsweise ausgangsseitig, der mit der ersten Ausgangswelle drehfest verbunden sind. Durch Verbinden beider Kupplungsteile einer oder beider Kupplungen, das heißt durch Schließen einer oder beider Kupplungen, werden somit die erste Ausgangswelle mit einer oder beiden ausgangsseitigen Sonnenräder drehfest verbunden. Ausgangsseitig bedeutet hier, dass die Sonnenräder auf der Ausgangswellenseite des Planetensatzes angeordnet sind. Auch andere Anordnungen sind hier denkbar, solange gewährleistet ist, dass die beiden ausgangsseitigen Sonnenräder der Planetensätze unabhängig von einander durch Schaltelemente direkt oder indirekt mit der ersten Ausgangswelle drehfest in Verbindung gebracht werden können und somit einen mit der ersten Ausgangswelle verbundenen oder einen von der ersten Ausgangswelle getrennten Betriebszustand einnehmen können.

Das dritte Schaltelement kann als Bremse ausgebildet sein, wobei die Bremse eingangsseitig mit der koaxial zur Eingangswelle gelagerten Hohlwelle und ausgangsseitig mit einem Gehäuseteil des Lastschaltgetriebes drehfest verbunden ist. Insofern stellt die Bremse auch eine Kupplung im oben beschriebenen Sinne dar, nur dass hier eine drehbar gelagerte Getriebekomponente, nämlich die zur Eingangswelle koaxial gelagerte Hohlwelle, an einem Gehäuseteil oder an einem mit dem Gehäuse drehfest verbundenem Getriebeteil verbunden wird und es sich nicht um beidseitig der Verbindung drehende Getriebekomponenten handelt.

Das Lastschaltgetriebe kann derart ausgebildet sein, dass durch Schließen des ersten und zweiten, sowie Öffnen des dritten Schaltelements, also beispielsweise durch Schließen der beiden Kupplungen und Öffnen der Bremse, ein erster Betriebsmodus herstellbar ist, in welchem der Drehsinn und die Drehzahl der Eingangswelle und der ersten Ausgangswelle gleich sind, das Lastschaltgetriebe also in einem Durchtriebsmodus (Übersetzungsverhältnis i=1) betreibbar ist.
Das Lastschaltgetriebe kann ferner derart ausgebildet sein, dass durch Schließen des dritten und des ersten oder zweiten, sowie Öffnen des zweiten bzw. ersten Schaltelements, also beispielsweise durch Schließen der Bremse und der ersten Kupplung und Öffnen der zweiten Kupplung, ein zweiter Betriebsmodus herstellbar ist, in welchem der Drehsinn der Eingangswelle und der ersten Ausgangswelle gleich und die Drehzahl verschieden sind, das Lastschaltgetriebe also in einem Untersetzungsmodus (Übersetzungsverhältnis i>1) betreibbar ist.

Ferner kann das Lastschaltgetriebe auch derart ausgebildet sein, dass durch Schließen des dritten und des zweiten oder ersten, sowie Öffnen des ersten bzw. zweiten Schaltelements, also beispielsweise durch Schließen der Bremse und der zweiten Kupplung und Öffnen der ersten Kupplung, ein dritter Betriebsmodus betreibbar ist, in welchem der Drehsinn und die Drehzahl der Eingangswelle und der ersten Ausgangswelle verschieden sind, das Lastschaltgetriebe also in einem Reversiermodus (Übersetzungsverhältnis i<0) betreibbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

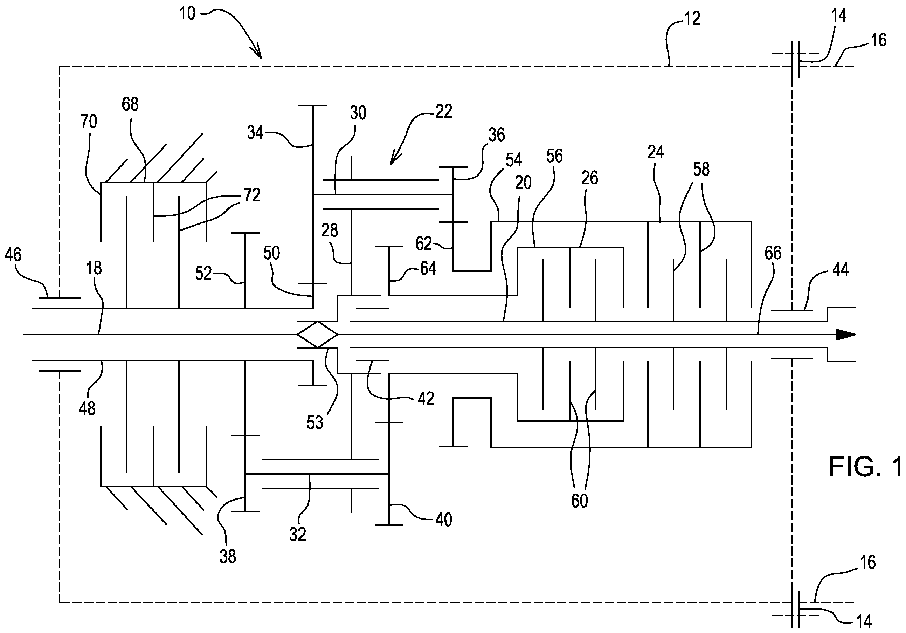

- Fig. 1: ein Getriebeschema für ein erfindungsgemäßes Lastschaltgetriebe

Das in Figur 1 dargestellte Lastschaltgetriebe 10 ist als Eingangsgetriebemodul ausgebildet und umfasst ein Gehäuse 12, welches beispielsweise über eine Flanschverbindung 14 an ein Hauptgetriebegehäuse 16 angeflanscht werden und mit einem Hauptgetriebemodul (nicht gezeigt) eines landwirtschaftlichen Fahrzeugs, beispielsweise eines Traktors bzw. Schleppers, kombiniert werden kann.

Das Lastschaltgetriebe 10 umfasst eine Eingangswelle 18 und eine Ausgangswelle 20, die über ein Planetengetriebe 22, sowie über ein erstes und ein zweites Schaltelement 24, 26 in Antriebsverbindung gebracht werden kann.

Das Planetengetriebe 22 weist einen Planententräger 28 auf, auf dem ein erster zweistufiger Planetensatz 30 und ein zweiter zweistufiger Planetensatz 32 drehbar gelagert sind. Der erste zweistufige Planetensatz 30 umfasst ein eingangsseitiges Planetenrad 34 sowie ein ausgangsseitiges Planetenrad 36. Der zweite zweistufige Planetensatz 32 umfasst ein eingangsseitiges Planetenrad 38 sowie ein ausgangsseitiges Planetenrad 40.

Der Planetenträger 28 ist drehfest mit der Eingangswelle 18 verbunden, wobei der Planetenträger 28 über ein erstes Wälzlager 42 auf der ersten Ausgangswelle 20 gelagert ist. Die erste Ausgangswelle 20 ist über ein zweites Wälzlager 44 ausgangsseitig am Gehäuse 12 gelagert. Ein drittes Wälzlager 46 ist eingangsseitig am Gehäuse 12 ausgebildet. In dem dritten Wälzlager 46 ist eine eingangsseitige Hohlwelle 48 gelagert.

Auf der eingangsseitigen Hohlwelle 48 ist ein erstes eingangsseitiges Sonnenrad 50 und ein zweites eingangsseitiges Sonnenrad 52 drehfest angeordnet. Durch die eingangsseitige Hohlwelle 48 erstreckt sich koaxial die Eingangswelle 18, welche über eine starre Kupplungsanordnung 53 drehfest mit dem Planententräger 28 verbunden ist.

Die Schaltelemente 24, 26 sind jeweils als Lamellenkupplungen ausgebildet und weisen jeweils einen drehbar auf der ersten Ausgangswelle 20 gelagerten Kupplungsgehäuseteil 54 bzw. 56 auf, der jeweils über eine in Eingriff bringbare Lamellenanordnung 58 bzw. 60 mit der ersten Ausgangswelle 20 drehfest verbindbar ist. Die Schaltelemente 24, 26 sind dabei koaxial zur ersten Ausgangswelle 20 angeordnet, wobei der Kupplungsgehäuseteil 56 des zweiten Schaltelements 26 in dem Kupplungsgehäuseteil 54 des ersten Schaltelements 24 gelagert ist.

Der Kupplungsgehäuseteil 54 des ersten Schaltelements 24 ist drehfest mit einem ersten ausgangsseitigen Sonnenrad 62 verbunden. Der Kupplungsgehäuseteil 56 des zweiten Schaltelements 26 ist drehfest mit einem zweiten ausgangsseitigen Sonnenrad 64 verbunden. Durch Schließen der Lamellenanordnung 58 bzw. 60 werden die ausgangsseitigen Sonnenräder 62 bzw. 64 wahlweise drehfest mit den ausgangsseitgen Planetenrädern 36 bzw. 40 verbunden.

Die erste Ausgangswelle 20 ist als Hohlwelle ausgebildet, durch welche sich eine zweite Ausgangswelle 66 erstreckt, welche drehfest über die starre Kupplungsanordnung 53 mit der Eingangswelle 18 verbunden ist.

Die eingangsseitige Hohlwelle 48 ist mit einem dritten Schaltelement 68 verbunden. Das dritte Schaltelement 68 ist als Bremse ausgebildet und weist einen mit dem Gehäuse 12 fest verbundenen Bremskörperteil 70 auf, der über eine Lamellenanordnung 72 mit der eingangsseitigen Hohlwelle 48 drehfest verbindbar ist. Durch Schließen der Lamellenanordnung 72 des dritten Schaltelements 68 wird die eingangsseitige Hohlwelle 48 drehfest mit dem Gehäuse 12 verbunden und blockiert, so dass auch die eingangsseitigen Sonnenräder 50 und 52 gegenüber dem Getriebegehäuse 12 blockiert werden.

Ausgehend von der eingangsseite des Lastschaltgetriebes sind Zahnradpaarungen mit folgenden Zähnezahlverhältnissen angeordnet:
- Das eingangsseitige Planetenrad 34 des ersten Planetensatzes 30 kämmt mit dem ersten eingangsseitigen Sonnenrad 50 in einem Zähnezahlverhältnis von 50/33.
- Das eingangsseitige Planetenrad 38 des zweiten Planetensatzes 32 kämmt mit dem zweiten eingangsseitigen Sonnenrad 52 in einem Zähnezahlverhältnis von 22/61.
- Das ausgangsseitige Planetenrad 36 des ersten Planetensatzes 30 kämmt mit dem ersten ausgangsseitigen Sonnenrad 62 in einem Zähnezahlverhältnis von 16/67.
- Das ausgangsseitige Planetenrad 40 des zweiten Planetensatzes 32 kämmt mit dem zweiten ausgangsseitigen Sonnenrad 64 in einem Zähnezahlverhältnis von 35/48.

Durch Schalten (öffnen oder schließen) der Schaltelemente 24, 26 und 68 (Kupplung 24, Kupplung 26 und Bremse 68) können nun folgende Betriebszustände für das Lastschaltgetriebe 10 erzielt werden.
Durch Schließen des ersten und zweiten Schaltelements 24, 26, sowie Öffnen des dritten Schaltelements 68, also durch Schließen der beiden Kupplungen 24, 26 und Öffnen der Bremse 68, ist ein erster Betriebsmodus herstellbar, in dem die Eingangswelle 18 über den Planetenträger 28, sowie über die drehfest verbundenen Zahnradpaarungen des ausgangsseitigen Planetenrads 36 und des ausgangsseitigen Sonnenrads 62 bzw. ausgangsseitigen Planetenrads 40 und des ausgangsseitigen Sonnenrads 64 direkt mit der ersten Ausgangswelle 20 verbunden ist, so dass Drehsinn und Drehzahl der Eingangswelle 18 und der ersten Ausgangswelle 20 gleich sind. Das Lastschaltgetriebe wird dann in dem sogenannten Durchtriebsmodus mit einem Übersetzungsverhältnis von i=1 und einem sich ergebenden Wirkungsgrad von 0,988 betrieben, was gegenüber gattungsgleichen herkömmlichen Lastschaltgetrieben eine deutliche Optimierung darstellt.

Durch Schließen des ersten und dritten Schaltelements 24, 68, sowie Öffnen des zweiten Schaltelements 26, also durch Schließen der Kupplung 24 und der Bremse 68 und Öffnen der Kupplung 26, ist ein zweiter Betriebsmodus herstellbar, in welchem die erste Ausgangswelle 20 über den ersten Planetensatz 30 angetrieben wird, wobei aufgrund der blockierenden eingangsseitigen Sonnenräder 50, 52 die Planetensätze 30 und 32 um die Sonnenräder wälzen und der Abtrieb über die Zahnradpaarung des ausgangsseitigen Planetenrads 36 und des ausgangsseitigen Sonnenrads 62 in Verbindung mit dem ersten Schaltelement 24 (Kupplung 24) erfolgt, so dass Drehsinn der Eingangswelle 18 und der ersten Ausgangswelle 20 gleich und die Drehzahl verschieden sind. Das Lastschaltgetriebe wird dann in dem sogenannten Untersetzungsmodus mit einem Übersetzungsverhältnis von i=1,19 und einem sich ergebenden Wirkungsgrad von 0,972 betrieben, was ebenfalls gegenüber gattungsgleichen herkömmlichen Lastschaltgetrieben eine deutliche Optimierung darstellt.

Durch Schließen des zweiten und dritten Schaltelements 26, 68, sowie Öffnen des ersten Schaltelements 24, also durch Schließen der Kupplung 26 und der Bremse 68 und Öffnen der Kupplung 24, ist ein zweiter Betriebsmodus herstellbar, in welchem die erste Ausgangswelle 20 über den zweiten Planetensatz 32 angetrieben wird, wobei aufgrund der blockierenden eingangsseitigen Sonnenräder 50, 52 die Planetensätze 30 und 32 um die Sonnenräder wälzen und der Abtrieb über die Zahnradpaarung des ausgangsseitigen Planetenrads 40 und des ausgangsseitigen Sonnenrads 64 in Verbindung mit dem zweiten Schaltelement 26 (Kupplung 26) erfolgt, so dass Drehsinn und Drehzahl der Eingangswelle 18 und der ersten Ausgangswelle 20 verschieden sind. Das Lastschaltgetriebe wird dann in dem sogenannten Reversiermodus mit einem Übersetzungsverhältnis von i=-0,98 und einem sich ergebenden Wirkungsgrad von 0,919 betrieben.

Somit werden drei verschiedene Betriebsmodi ermöglicht, wobei in jedem Betriebsmodus jeweils zwei der Schaltelemente 24, 26, 68 geschlossen sind und damit gegenüber dem Stand der Technik Schleppverluste deutlich minimiert werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegend beanspruchte Erfindung fallen.

## Patentansprüche

1. Lastschaltgetriebe (10) mit einer Eingangswelle (18), einer koaxial zur Eingangswelle (18) angeordneten ersten Ausgangswelle (20), einem Planetengetriebe (22) mit einem mit der Eingangswelle (18) in Verbindung stehenden Planetenträger (28) und wenigstens drei Schaltelementen (24, 26, 68), **dadurch gekennzeichnet, dass** das Planetengetriebe (22) wenigstens zwei Stufenplanetensätze (30, 32) umfasst, die an dem gemeinsamen Planetenträger (28) gelagert sind und wobei jeder Stufenplanetensatz (30,32) eingangsseitig und ausgangsseitig mit jeweils einer Sonne (50, 62, 52, 64) kämmt, mit dem ersten Schaltelement (24) die erste Ausgangswelle (20) mit der ausgangsseitigen Sonne (62) des einen Stufenplanetensatzes (30) verbindbar ist, mit dem zweiten Schaltelement (26) die erste Ausgangswelle (20) mit der ausgangsseitigen Sonne (64) des anderen Stufenplanetensatzes (32) verbindbar ist und mit dem dritten Schaltelement (68) die eingangsseitigen Sonnenräder (50, 52) beider Stufenplanetensätze (30, 32) blockierbar sind.

2. Lastschaltgetriebe (10) nach Anspruch 1, **dadurch gekennzeichnet, dass** eine Verbindung der ausgangsseitigen Sonnenräder (62, 64) mit der ersten Ausgangswelle (20), sowie ein Blockieren der eingangsseitigen Sonnenräder (50, 52) jeweils durch Schließen der entsprechenden Schaltelemente (24, 26, 68) herstellbar ist und für jeden Betriebszustand des Lastschaltgetriebes (10) jeweils zwei Schaltelemente (24, 26, 68) geschlossen sind.

3. Lastschaltgetriebe (10) nach Anspruch 1 oder 2, **dadurch gekennzeichnet, dass** die eingangsseitigen Sonnenräder (50, 52) drehfest auf einer koaxial zur Eingangswelle (18) gelagerten Hohlwelle (48) gelagert sind, wobei mit dem dritten Schaltelement (68) die eingangsseitigen Sonnenräder (50, 52) beider Stufenplanetensätze (30, 32) durch Blockieren der Hohlwelle (48) blockierbar sind.

4. Lastschaltgetriebe (10) nach einem der Ansprüche 1 bis 3, **dadurch gekennzeichnet, dass** die erste Ausgangswelle (20) als Hohlwelle ausgebildet ist, durch welche sich eine mit der Eingangswelle (18) verbundene zweite Ausgangswelle (66) erstreckt.

5. Lastschaltgetriebe (10) nach einem der Ansprüche 1 bis 4, **dadurch gekennzeichnet, dass** das erste und das zweite Schaltelement (24, 26) jeweils als Kupplung ausgebildet sind, wobei die Kupplungen eingangsseitig mit jeweils einem der ausgangsseitigen Sonnenräder (62, 64) und ausgangsseitig jeweils mit der ersten Ausgangswelle (20) drehfest verbunden sind.

6. Lastschaltgetriebe (10) nach einem der Ansprüche 3 bis 5, **dadurch gekennzeichnet, dass** das dritte Schaltelement (68) als Bremse ausgebildet ist, wobei die Bremse eingangsseitig mit der koaxial zur Eingangswelle (18) gelagerten Hohlwelle (48) und ausgangsseitig mit einem Gehäuseteil (12) des Lastschaltgetriebes (10) drehfest verbunden ist.

7. Lastschaltgetriebe (10) nach einem der Ansprüche 1 bis 6, **dadurch gekennzeichnet, dass** das Lastschaltgetriebe (10) durch Schließen des ersten und zweiten Schaltelements (24, 26), sowie Öffnen des dritten Schaltelements (68) in einem ersten Betriebsmodus betreibbar ist, in welchem der Drehsinn und die Drehzahl der Eingangswelle (18) und der ersten Ausgangswelle (20) gleich sind.

8. Lastschaltgetriebe (10) nach einem der Ansprüche 1 bis 7, **dadurch gekennzeichnet, dass** das Lastschaltgetriebe (10) durch Schließen des dritten und des ersten oder zweiten Schaltelements (68, 24 bzw. 26), sowie Öffnen des zweiten bzw. ersten Schaltelements (26 bzw. 24) in einem zweiten Betriebsmodus betreibbar ist, in welchem der Drehsinn der Eingangswelle (18) und der ersten Ausgangswelle (20) gleich und die Drehzahl verschieden sind.

9. Lastschaltgetriebe (10) nach einem der Ansprüche 1 bis 8, **dadurch gekennzeichnet, dass** das Lastschaltgetriebe (10) durch Schließen des dritten und des zweiten oder ersten Schaltelements (68, 26 bzw. 24), sowie Öffnen des ersten bzw. zweiten Schaltelements (24 bzw. 26) in einem dritten Betriebsmodus betreibbar ist, in welchem der Drehsinn und die Drehzahl der Eingangswelle (18) und der ersten Ausgangswelle (20) verschieden sind.

## Claims

1. Power shift transmission (10) having an input shaft (18), a first output shaft (20) which is arranged coaxially with respect to the input shaft (18), a planetary gear mechanism (22) with a planetary carrier (28) which is connected to the input shaft (18) and at least three shifting elements (24, 26, 68), **characterized in that** the planetary gear mechanism (22) comprises at least two multi-step planet sets (30, 32) which are mounted on the common planetary carrier (28), and each multi-step planet set (30, 32) meshing on the input side and on the output side with in each case one sun (50, 62, 52, 64), by way of which first shifting element (24) the first output shaft (20) can be connected to the output-side sun (62) of the one multi-step planet set (30), by way of which second shifting element (26) the first output shaft (20) can be connected to the output-side sun (64) of the other multi-step planet set (32), and by way of which third shifting element (68) the input-side sun gears (50, 52) of the two multi-step planet sets (30, 32) can be blocked.

2. Power shift transmission (10) according to Claim 1, **characterized in that** a connection of the output-side sun gears (62, 64) to the first output shaft (20) and blocking of the input-side sun gears (50, 52) are established in each case by way of closure of the corresponding shifting elements (24, 26, 68), and in each case two shifting elements (24, 26, 68) are closed for each operating state of the power shift transmission (10).

3. Power shift transmission (10) according to Claim 1 or 2, **characterized in that** the input-side sun gears (50, 52) are mounted fixedly on a hollow shaft (48) so as to rotate with it, which hollow shaft (48) is mounted coaxially with respect to the input shaft (18), it being possible for the input-side sun gears (50, 52) of the two multi-step planet sets (30, 32) to be blocked by way of the third shifting element (68) by blocking of the hollow shaft (48).

4. Power shift transmission (10) according to one of Claims 1 to 3, **characterized in that** the first output shaft (20) is configured as a hollow shaft, through which a second output shaft (66) which is connected to the input shaft (18) extends.

5. Power shift transmission (10) according to one of Claims 1 to 4, **characterized in that** the first and the second shifting element (24, 26) are configured in each case as a clutch, the clutches being connected on the input side to in each case one of the output-side sun gears (62, 64) and on the output side in each case to the first output shaft (20), in each case fixedly so as to rotate with it.

6. Power shift transmission (10) according to one of Claims 3 to 5, **characterized in that** the third shifting element (68) is configured as a brake, the brake being connected on the input side to the hollow shaft (48) which is mounted coaxially with respect to the input shaft (18), and on the output side to a housing part (12) of the power shift transmission (10), in each case fixedly so as to rotate with it.

7. Power shift transmission (10) according to one of Claims 1 to 6, **characterized in that** the power shift transmission (10) can be operated in a first operating mode by way of closure of the first and second shifting element (24, 26) and opening of the third shifting element (68), in which first operating mode the rotational direction and the rotational speed of the input shaft (18) and the first output shaft (20) are identical.

8. Power shift transmission (10) according to one of Claims 1 to 7, **characterized in that** the power shift transmission (10) can be operated in a second operating mode by way of closure of the third and the first or second shifting element (68, 24 or 26) and opening of the second or first shifting element (26 or 24), in which second operating mode the rotational direction of the input shaft (18) and the first output shaft (20) is identical and the rotational speed is different.

9. Power shift transmission (10) according to one of Claims 1 to 8, **characterized in that** the power shift transmission (10) can be operated in a third operating mode by way of closure of the third and the second or first shifting element (68, 26 or 24) and opening of the first or second shifting element (24 or 26), in which third operating mode the rotational direction and the rotational speed of the input shaft (18) and the first output shaft (20) are different.

## Revendications

1. Boîte de vitesses avec commande sous charge (10) avec un arbre d'entrée (18), un premier arbre de sortie (20) disposé de façon coaxiale à l'arbre d'entrée (18), un engrenage planétaire (22) avec un porte-satellites (28) et au moins trois éléments de commande (24, 26, 68), **caractérisée en ce que** l'engrenage planétaire (22) comprend au moins deux ensembles de satellites de rapports (30, 32), qui sont montés sur le porte-satellites commun (28) et dans laquelle chaque ensemble de satellites de rapports (30, 32) engrène à l'entrée et à la sortie respectivement avec une roue solaire (50, 62, 52, 64), le premier arbre de sortie (20) peut être relié par le premier élément de commande (24) à la roue solaire de sortie (62) d'un premier ensemble de satellites de rapports (30), le premier arbre de sortie (20) peut être relié par le deuxième élément de commande (26) à la roue solaire de sortie (64) de l'autre ensemble de satellites de rapports (32) et les roues solaires d'entrée (50, 52) des deux ensembles de satellites de rapports (30, 32) peuvent être bloquées avec le troisième élément de commande (68).

2. Boîte de vitesses avec commande sous charge (10) selon la revendication 1, **caractérisée en ce qu'**une liaison des roues solaires de sortie (62, 64) avec le premier arbre de sortie (20), ainsi qu'un blocage des roues solaires d'entrée (50, 52) peuvent être réalisés respectivement par fermeture des éléments de commande correspondants (24, 26, 68) et chaque fois deux éléments de commande (24, 26, 68) sont fermés pour chaque état de fonctionnement de la boîte de vitesses avec commande sous charge (10).

3. Boîte de vitesses avec commande sous charge (10) selon la revendication 1 ou 2, **caractérisée en ce que** les roues solaires d'entrée (50, 52) sont montées de façon solidaire en rotation sur un arbre creux (48) monté de façon coaxiale à l'arbre d'entrée (18), dans laquelle les roues solaires d'entrée (50, 52) des deux ensembles de satellites de rapports (30, 32) peuvent être bloquées à l'aide du troisième élément de commande (68) par blocage de l'arbre creux (48).

4. Boîte de vitesses avec commande sous charge (10) selon l'une quelconque des revendications 1 à 3, **caractérisée en ce que** le premier arbre de sortie (20) est formé par un arbre creux, à travers lequel s'étend un deuxième arbre de sortie (66) relié à l'arbre d'entrée (18).

5. Boîte de vitesses avec commande sous charge (10) selon l'une quelconque des revendications 1 à 4, **caractérisée en ce que** le premier et le deuxième éléments de commande (24, 26) sont réalisés respectivement sous forme d'embrayage, dans laquelle les embrayages sont reliés de façon solidaire en rotation à l'entrée respectivement à une des roues solaires de sortie (62, 64) et à la sortie respectivement au premier arbre de sortie (20).

6. Boîte de vitesses avec commande sous charge (10) selon l'une quelconque des revendications 3 à 5, **caractérisée en ce que** le troisième élément de commande (68) est réalisé sous forme de frein, dans laquelle le frein est relié de façon solidaire en rotation à l'entrée à l'arbre creux (48) monté de façon coaxiale à l'arbre d'entrée (18) et à la sortie à une partie de carter (12) de la boîte de vitesses avec commande sous charge (10).

7. Boîte de vitesses avec commande sous charge (10) selon l'une quelconque des revendications 1 à 6, **caractérisée en ce que** la boîte de vitesses avec commande sous charge (10) peut fonctionner dans un premier mode de fonctionnement par fermeture du premier et du deuxième éléments de commande (24, 26), ainsi que par ouverture du troisième élément de commande (68), dans lequel le sens de rotation et le nombre de tours de l'arbre d'entrée (18) et du premier arbre de sortie (20) sont égaux.

8. Boîte de vitesses avec commande sous charge (10) selon l'une quelconque des revendications 1 à 7, **caractérisée en ce que** la boîte de vitesses avec commande sous charge (10) peut fonctionner dans un deuxième mode de fonctionnement par fermeture du troisième et du premier ou du deuxième éléments de commande (68, 24 ou 26), ainsi que par ouverture du deuxième ou du premier élément de commande (26 ou 24), dans lequel le sens de rotation de l'arbre d'entrée (18) et du premier arbre de sortie (20) est identique et le nombre de tours est différent.

9. Boîte de vitesses avec commande sous charge (10) selon l'une quelconque des revendications 1 à 8, **caractérisée en ce que** la boîte de vitesses avec commande sous charge (10) peut fonctionner dans un troisième mode de fonctionnement par fermeture du troisième et du deuxième ou du premier éléments de commande (68, 26 ou 24), ainsi que par ouverture du premier ou du deuxième élément de commande (24 ou 26), dans lequel le sens de rotation et le nombre de tours de l'arbre d'entrée (18) et du premier arbre de sortie (20) sont différents.
